# EUROPÄISCHE PATENTSCHRIFT

(11) **EP 2 455 648 B1**
(45) Veröffentlichungstag und Bekanntmachung des Hinweises auf die Patenterteilung: **09.01.2019**
(21) Anmeldenummer: 11187836.9
(22) Anmeldetag: 04.11.2011
(51) Int. Cl.: F16L 59/02

(54) **Verbindungselement für Behälterisolierungen**
Linking element for container insulations
Elément de liaison pour isolations de récipients

(30) Priorität: 23.11.2010 AT 71710 U
(43) Veröffentlichungstag der Anmeldung: 23.05.2012
(73) Patentinhaber: Ecotherm Austria GmbH, 4081 Hartkirchen (AT)
(72) Erfinder: Lehner-Dittenberger, Christof, 4070 Eferding (AT)
(74) Vertreter: KLIMENT & HENHAPEL

(56) Entgegenhaltungen:
- EP-A1- 0 132 251
- AT-B- 388 042
- DE-A1-102008 023 905
- DE-U1-202009 008 825
- US-A- 3 397 496
- US-A1- 2010 236 182

## Beschreibung

Die Erfindung betrifft ein Verbindungselement für aneinander liegende Stirnflächen einer, einen Behälter manschettenartig umgebenden thermischen Isolierung, gemäß dem Oberbegriff von Anspruch 1.

Ein solches gattungsgemäßes Verbindungselement wird etwa in der EP 0 132 251 A1 beschrieben.

In vielen Anwendungen sind Behälter thermisch zu isolieren, etwa im Fall von Warmwasserspeicher und dergleichen. Dabei wird der Behälter zumeist mit einer thermischen Isolierung manschettenartig ummantelt, wobei entweder eine einteilige Isolierung um den Mantel des Behälters gelegt wird, oder mehrere Isolierungselemente verwendet werden, die jeweils entlang ihrer aneinander liegenden, vertikalen Stirnflächen miteinander verbunden werden.

Die Isolierung selbst kann unterschiedlich ausgeführt sein, zumeist weist sie jedoch mehrere Schichten auf, etwa eine innere Isolationsschicht aus einer Hart- oder Weichschaumisolierung, oder einem Faservlies, sowie eine äußere Abdeckung, die zur Stabilisierung des isolierenden Aufbaus aus einem steifen und zugfesten, jedoch biegsamen Material gefertigt ist, etwa aus einem Kunststoff wie Polystyrol.

Die Befestigung der Isolierung erfolgt oftmals erst am Ort des Einbaus vor der Endmontage des Behälters. Die Isolierung bzw. deren einzelne Elemente sind somit vor Ort miteinander zu verbinden, sodass entsprechende Verbindungselemente vorzusehen sind, die einerseits rasch und möglichst einfach zu bedienen sein sollen, und andererseits eine zuverlässige und beständige Montage der Isolierung sicher stellen müssen.

Für solche Verbindungselemente wurden verschiedene Ausführungsformen vorgeschlagen. Die DE 10 2008 023 905 A1 schlägt etwa ein Verbindungselement mithilfe eines Rastmittels vor. Zudem sind etwa Klettverschlussbänder bekannt, mit denen aneinander liegende Isolierungselemente entlang ihrer Längskanten miteinander verbunden werden. Diese Klettverschlussbänder lösen sich jedoch im Laufe der Zeit, da die Verklebung, mit der die Klettverschlussbänder an der Isolierung befestigt sind, infolge Alterung und Wärmeeinwirkung zerstört wird. Des Weiteren sind Hakenleisten bekannt, die ebenfalls über Verklebungen mit der Abdeckung verbunden werden, und somit über vergleichbare Nachteile verfügen. Auch Verbindungselemente wie Zugfedern oder Gummiringe unterliegen starker Abnutzung, wodurch ihre Funktionsfähigkeit im Laufe der Zeit beeinträchtigt wird. Des Weiteren ist es vorteilhaft, wenn die Verbindungselemente auch wieder lösbar sind, da für Wartungsarbeiten die Isolierung mitunter entfernt werden muss, was aber bei vielen herkömmlichen Verbindungselementen nicht möglich ist.

Es ist daher das Ziel der Erfindung Verbindungselemente für manschettenartige Isolierungen für Behälter bereit zu stellen, die einfach zu schließen sind, auch über lange Zeit einen sicheren Verschluss sicherstellen, und dabei bei Bedarf auch wieder lösbar sind.

Diese Ziele werden durch die Merkmale von Anspruch 1 erreicht. Anspruch 1 bezieht sich dabei auf ein Verbindungselement für aneinander liegende Stirnflächen einer, einen Behälter manschettenartig umgebenden thermischen Isolierung, wobei zwei leistenartige Profilelemente mit jeweils einem Befestigungsabschnitt für jeweils eine Stirnfläche der Isolierung vorgesehen sind, wobei das erste Profilelement eine an den Befestigungsabschnitt anschließende Aufnahme mit einer konkaven, im Querschnitt halbkreisförmig gewölbten Innenfläche aufweist, und das zweite Profilelement einen an den Befestigungsabschnitt anschließenden Einsatz mit zwei, im Querschnitt bogenförmigen Endbereichen, deren konvexe Außenflächen in ihrer Krümmung jener der konkaven Innenfläche der Aufnahme jeweils entsprechen. Erfindungsgemäß wird vorgeschlagen, dass das erste Profilelement eine die Innenfläche verlängernde und den Öffnungsquerschnitt der Innenfläche geringfügig verengende Halteschulter aufweist, wobei die Außenfläche eines ersten Endbereiches des zweiten Profilelements in ein abgeflachtes, freies Ende übergeht, und die Außenfläche eines zweiten Endbereiches des zweiten Profilelements über eine Kippkante in eine Nut für die Halteschulter übergeht.

Der Einsatz des zweiten Profilelements kann somit in die Aufnahme des ersten Profilelements eingelegt werden, wobei es mit seinen konvexen Endbereichen formschlüssig von der konkaven Innenfläche der Aufnahme aufgenommen wird. Da die halbkreisförmig gewölbte Innenfläche der Aufnahme aber mit einer, den Öffnungsquerschnitt der Innenfläche geringfügig verengenden Halteschulter versehen ist, geht die Außenfläche eines ersten Endbereiches des Einsatzes in ein abgeflachtes, freies Ende über, um den Einsatz in die Aufnahme einlegen zu können. Durch Verdrehen des zweiten Profilelementes relativ zum ersten Profilelement entlang einer zu den Stirnflächen der manschettenartigen Isolierung parallelen Längsachse wird der Formschluss sichergestellt, da der Einsatz geometriebedingt nicht mehr aus der Aufnahme treten kann. Durch ein Verdrehen des Einsatzes in die umgekehrte Drehrichtung kann der Einsatz wieder aus der Aufnahme gelöst werden, sodass das Verbindungselement auch wieder geöffnet werden kann. Ein unbeabsichtigtes Öffnen des Verbindungselements ist aber nicht möglich, da das Verbindungselement im praktischen Einsatz lediglich auf Zug belastet wird.

Um das Öffnen und Schließen des Verbindungselements zu erleichtern, wird erfindungsgemäß der Öffnungsquerschnitt der Innenfläche der Aufnahme mithilfe einer Halteschulter verengt, die von einer Nut in der Außenfläche des zweiten Endbereiches des Einsatzes aufgenommen wird, wobei die Außenfläche des zweiten Endbereiches eine Kippkante aufweist. Die Halteschulter kann somit zunächst in die Nut eingelegt werden, wodurch das Verdrehen des zweiten Profilelements relativ zum ersten Profilelement erleichtert wird. Genau genommen handelt es sich dabei zunächst um eine Kippbewegung des Einsatzes um die Kippkante, wobei das abgeflachte, freie Ende des Einsatzes in die Aufnahme eingeführt wird. In weiterer Folge wird eine Drehbewegung des Einsatzes innerhalb der Aufnahme ausgeführt, wodurch der Formschluss hergestellt wird. Zum Öffnen des Verbindungselements werden diese Bewegungsvorgänge umgekehrt.

Gemäß einer bevorzugten Ausführungsform ist der Befestigungsabschnitt jeweils als Klemmabschnitt ausgeführt, der an die jeweilige Stirnfläche der Isolierung über Klemmwirkung montierbar ist. Mithilfe einer solchen mechanischen Befestigung können Verklebungen und dergleichen vermieden werden. Dabei kann die Isolierung etwa mit ihrer zugfesten, steifen Abdeckung mit dem Klemmabschnitt verbunden werden.

Der Klemmabschnitt kann jeweils zwei Schenkel aufweisen, die federnd ausgeführt sind. Eine solche Ausführung erleichtert das Lösen der Klemmverbindung etwa zur Abdeckung und in weiterer Folge ein Verdrehen der beiden Profilelemente zum Öffnen des Verbindungselementes.

Hierfür ist es besonders vorteilhaft, wenn einer der beiden Schenkel einen im Wesentlichen senkrecht abstehenden Betätigungsabschnitt aufweist. Mithilfe eines solchen Betätigungsabschnittes kann nicht nur die Klemmwirkung gelöst werden, sondern auch ein relatives Verdrehen der beiden Profilelemente einfacher bewerkstelligt werden.

Des Weiteren kann vorgesehen sein, dass zumindest einer der beiden Schenkel einen hakenförmigen Fortsatz aufweist. Ein solcher hakenförmiger Fortsatz verbessert die Klemmwirkung für die Isolierung, wobei etwa eine Perforation entlang der Längskante der Isolierung vorgesehen sein kann, in die die hakenförmigen Fortsätze eingreifen, wodurch die Klemmwirkung stark erhöht werden kann.

Die Erfindung wird in weiterer Folge anhand eines Ausführungsbeispiels mithilfe der beiliegenden Zeichnungen näher erläutert. Hierbei zeigen die
Fig. 1 eine Darstellung eines Behälters mit einer manschettenartigen Isolierung,
Fig. 2 einen Schnitt entlang der Schnittebene A der Fig. 1,
Fig. 3 eine vergrößerte Ansicht eines in Fig. 2 als Detail A eingezeichneten, erfindungsgemäßen Verbindungselements,
Fig. 4 eine vergrößerte Ansicht einer in Fig. 2 als Detail D eingezeichneten Klemmleiste,
Fig. 5 eine Ausführungsform der Klemmleiste gemäß Fig. 4,
Fig. 6 eine Ausführungsform für das erste Profilelement gemäß der Erfindung,
Fig. 7 eine Ausführungsform für das zweite Profilelement gemäß der Erfindung,
Fig. 8a das erfindungsgemäße Verbindungselement in einer ersten Lage, bei der die Halteschulter des ersten Profilelements in die Nut des zweiten Profilelements eingesetzt wird,
Fig. 8b das erfindungsgemäße Verbindungselement in einer zweiten Lage, bei der das zweite Profilelement relativ zum ersten Profilelement gekippt wird, um den Einsatz in die Aufnahme einzusetzen, und die
Fig. 8c das erfindungsgemäße Verbindungselement in einer dritten Lage, bei der das zweite Profilelement relativ zum ersten Profilelement verdreht wurde, um einen Formschluss herzustellen.

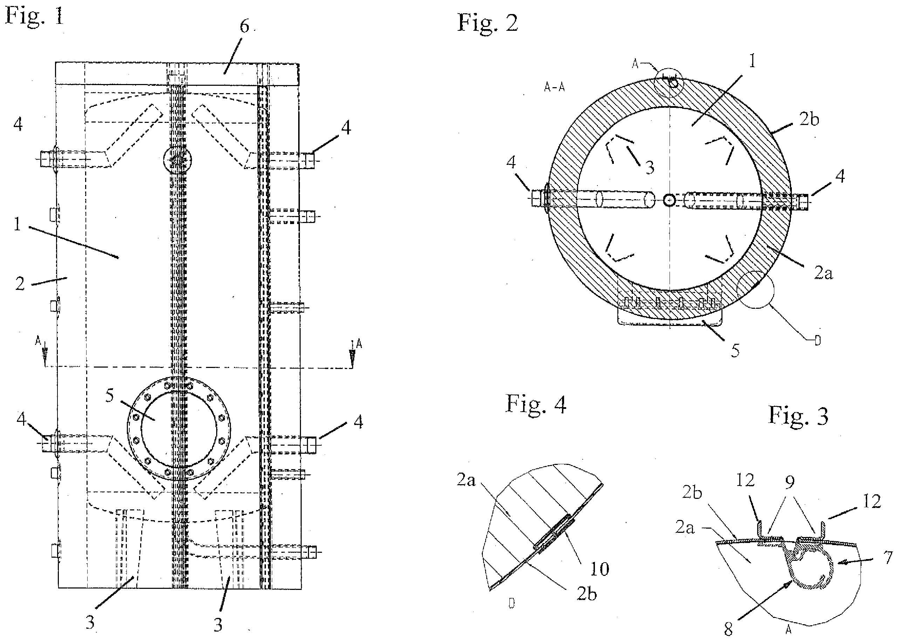

Zunächst wird auf die Fig. 1 Bezug genommen, die eine Darstellung eines Behälters 1 mit einer manschettenartigen Isolierung 2 zeigt. Der Behälter 1 ist zumeist aus einem Stahlmantel gefertigt, der auf Stützfüße 3 gelagert ist. Der Behälter ist ferner mit Anschlussleitungen 4 versehen, die zur Zu- und Abfuhr eines flüssigen Mediums dienen. Des Weiteren kann ein Anschlussflansch 5 vorgesehen sein. Die manschettenartige Isolierung 2 ist in ihrem oberen Bereich mit einem isolierenden Deckel 6 versehen.

Die manschettenartige Isolierung 2 kann zumeist erst im Zuge der Endmontage des Behälters 1 befestigt werden. Hierfür wird die Isolierung 2 zunächst als einteiliges oder mehrteiliges, biegsames, flächiges Element bereitgestellt, das manschettenartig um den Mantel des Behälters 1 gelegt wird. In weiterer Folge sind die aneinander liegenden Stirnflächen der Isolierung 2 miteinander zu verbinden, sodass die Isolierung 2 dicht am Mantel des Behälters 1 anliegt. Diese Konfiguration ist in der Fig. 2 ersichtlich, die einen Schnitt entlang der Schnittebene A der Fig. 1 zeigt. Die einzelnen Elemente der thermischen Isolierung 2 können dabei durch Klemmleisten 10 verbunden sein, die in der Fig. 2 als "Detail D" gekennzeichnet sind, sowie durch erfindungsgemäße Verbindungselemente, die in der Fig. 2 als "Detail A" gekennzeichnet sind. Die Klemmleiste 10, sowie das erfindungsgemäße Verbindungselement erstrecken sich dabei jeweils in vertikaler Richtung über die gesamte Längserstreckung der aneinander liegenden Stirnflächen der Isolierung 2. Der Aufbau der Isolierung 2 kann unterschiedlich ausgeführt sein, so kann sie etwa eine innere Isolierschicht 2a aufweisen, die sich dicht an den Mantel des Behälters 1 anlegt. Die innere Isolierschicht 2a kann hierfür aus mineralischen Fasern, etwa Glas- oder Steinwolle, oder aus Schaumstoff, etwa Polyurethan, Polyvinylchlorid (PVC), Polypropylen oder Polystyrol, oder einem Faservlies gefertigt sein, wobei sie vorzugsweise elastische Eigenschaften aufweist. Da die innere Isolierschicht 2a in diesem Fall nur über mäßige Stabilität gegenüber mechanischen Beanspruchungen verfügt, kann sie auf der äußeren Seite mit einer Abdeckung 2b versehen sein, die aus einem biegsamen, jedoch steifen und zugfesten Material, etwa einem harten Kunststoff, Holz oder Metall, gefertigt ist. Die Abdeckung 2b dient somit dem Schutz der inneren Isolierschicht 2a sowie zu dessen Versteifung, und sorgt für ein ansprechendes optisches Erscheinungsbild.

Das erfindungsgemäße Verbindungselement in seiner Gebrauchslage ist in der Fig. 3 dargestellt, die eine vergrößerte Ansicht des in Fig. 2 als Detail A eingezeichneten, erfindungsgemäßen Verbindungselements zeigt. Es weist ein erstes Profilelement 7 auf, sowie ein zweites Profilelement 8, die jeweils leistenartig ausgeführt sind. Das erste Profilelement 7 und das zweite Profilelement 8 weisen des Weiteren jeweils einen Befestigungsabschnitt 9 auf, über den das erste Profilelement 7 und das zweite Profilelement 8 mit der Isolierung 2 verbunden sind, etwa mit der Abdeckung 2b der Isolierung 2. Die verbleibenden Abschnitte des ersten Profilelements 7 und des zweiten Profilelements 8 liegen dabei eingebettet in der inneren Isolierschicht 2a, das entweder aufgrund seiner Elastizität zurückweicht, oder bei fehlender Elastizität entsprechend ausgeschnitten ist. In der Gebrauchslage des erfindungsgemäßen Verbindungselements sind somit lediglich der Befestigungsabschnitt 9, sowie die Betätigungsabschnitte 12 sichtbar, was für ein ansprechendes optisches Erscheinungsbild sorgt.

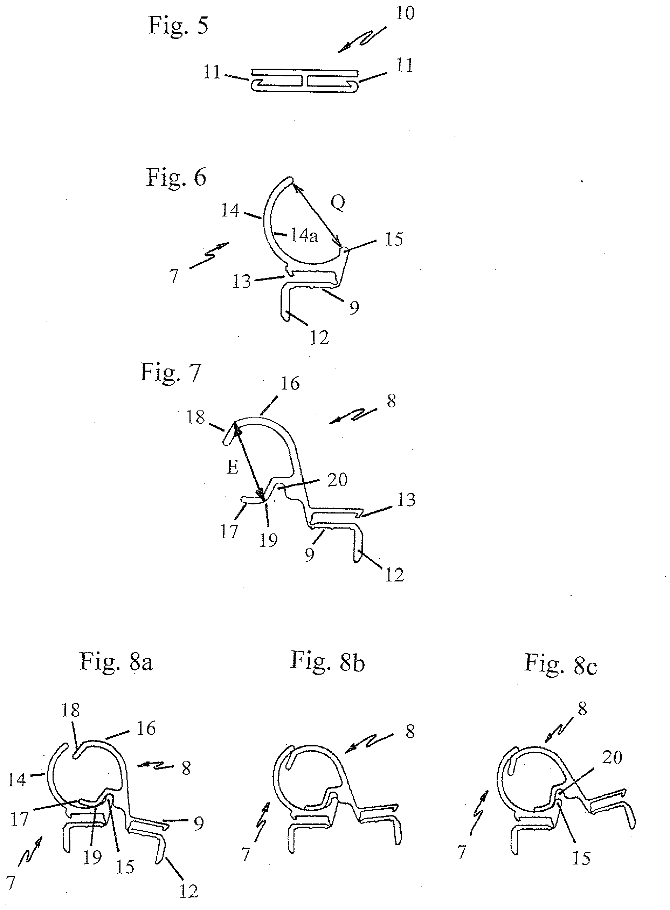

Bevor das erfindungsgemäße Verbindungselement näher beschrieben wird, soll zunächst auf die Klemmleiste 10 eingegangen werden, die in der Fig. 4 und der Fig. 5 dargestellt ist. Die Klemmleiste 10 ist etwa als symmetrischer Körper ausgeführt, der beidseitig ein U-förmiges Profil aufweist, um die Isolierung 2, etwa über deren Abdeckung 2b, aufzunehmen und über eine Klemmwirkung zu fixieren. Nach innen abstehende Haken 11 verbessern dabei die Klemmwirkung. Hierzu kann entlang der Längskante der Abdeckung 2b der Isolierung 2 eine Perforation vorgesehen sein, in die die Haken 11 eingreifen.

Nun wird eine Ausführungsform des erfindungsgemäßen Verbindungselements anhand der Fig. 6 und 7 beschrieben, wobei die Fig. 6 eine Ausführungsform für das erste Profilelement 7 zeigt, und die Fig. 7 eine Ausführungsform für das zweite Profilelement 8. Die beiden Profilelemente 7, 8 sollten verschleißfest und stabil sein, und werden daher bevorzugt aus einem entsprechenden Kunststoff, Holz oder einem Metall wie etwa Aluminium hergestellt. Das erste Profilelement 7 umfasst einen Befestigungsabschnitt 9 für eine Stirnfläche der Isolierung 2, etwa für deren Abdeckung 2b, sowie eine an den Befestigungsabschnitt 9 anschließende Aufnahme 14 mit einer konkaven, im Querschnitt halbkreisförmig gewölbten Innenfläche 14a und einer die Innenfläche 14a verlängernden und den Öffnungsquerschnitt Q der Innenfläche 14a geringfügig verengenden Halteschulter 15. Das zweite Profilelement 8 umfasst ebenfalls einen Befestigungsabschnitt 9 für eine Stirnfläche der Isolierung 2, etwa für deren Abdeckung 2b, sowie einen an den Befestigungsabschnitt 9 anschließenden Einsatz mit zwei, im Querschnitt bogenförmigen Endbereichen 16, 17, deren konvexe Außenflächen in ihrer Krümmung jener der konkaven Innenfläche 14a der Aufnahme 14 jeweils entsprechen. Die Außenfläche des ersten Endbereiches 16 geht dabei in ein abgeflachtes, freies Ende 18 über, und die Außenfläche des zweiten Endbereiches 17 über eine Kippkante 19 in eine Nut 20 für die Halteschulter 15. Die in der Fig. 7 eingezeichnete Entfernung E zwischen der Kippkante 19 des zweiten Endbereiches 17 und dem Übergang zum abgeflachten, freien Ende 18 des ersten Endbereiches 16 des Einsatzes ist dabei geringfügig größer, als der Öffnungsquerschnitt Q der Aufnahme 14, wodurch der Formschluss bewirkt und der Einsatz innerhalb der Aufnahme 14 nach Verdrehen des zweiten Profilelements 8 relativ zum ersten Profilelement 7 gehalten wird.

Der Befestigungsabschnitt 9 ist jeweils als Klemmabschnitt ausgeführt, der an die jeweilige Stirnfläche der Isolierung 2, etwa über deren Abdeckung 2b, über Klemmwirkung montierbar ist. Hierzu kann der Klemmabschnitt jeweils zwei Schenkel aufweisen, die federnd ausgeführt sind, wobei einer der beiden Schenkel einen im Wesentlichen senkrecht abstehenden Betätigungsabschnitt 12 aufweist. Des Weiteren kann zumindest einer der beiden Schenkel in einer zur Klemmleiste 10 analogen Weise einen hakenförmigen Fortsatz 13 aufweisen. Ein solcher hakenförmiger Fortsatz 13 verbessert die Klemmwirkung für die Isolierung 2, wobei etwa eine Perforation entlang der Längskante der Isolierung 2 vorgesehen sein kann, in die die hakenförmigen Fortsätze 13 eingreifen, wodurch die Klemmwirkung stark erhöht werden kann. Mithilfe der Betätigungsabschnitte 12 kann einerseits die Klemmwirkung gelöst werden, indem die Betätigungsabschnitte 12 zueinander gedrückt werden, und ein relatives Verdrehen der beiden Profilelemente 7, 8 zum Öffnen des Verbindungselements bewerkstelligt werden. Des Weiteren kann das Verbindungselement auch geschlossen werden, indem die beiden Profilelemente 7, 8 durch auseinander drücken der Betätigungsabschnitte 12 in Gegenrichtung verdreht werden.

Das Schließen des erfindungsgemäßen Verbindungselements wird anhand der Fig. 8 näher erläutert. Hierbei zeigt die Fig. 8a das erfindungsgemäße Verbindungselement in einer ersten Lage, bei der die Halteschulter 15 des ersten Profilelements 7 in die Nut 20 des zweiten Profilelements 8 eingesetzt wurde. Durch Verdrehen des zweiten Profilelementes 8 relativ zum ersten Profilelement 7 mithilfe der Betätigungsabschnitte 12 entlang einer zu den Stirnflächen der manschettenartigen Isolierung 2 parallelen Längsachse kippt das zweite Profilelement 8 zunächst um die Kippkante 19 in Bezug auf die Fig. 8a entgegen dem Uhrzeigersinn. Aufgrund des nach innen abgeflacht ausgeführten, freien Endes 18 kann der erste Endbereich 16 des zweiten Profilelements 8 in die Aufnahme 14 eintreten, bis schließlich die Konfiguration gemäß der Fig. 8b erreicht wird.

Wird das zweite Profilelement 8 weiter verdreht, gleiten die beiden Endbereiche 16, 17 entlang der halbkreisförmig gewölbten Innenfläche 14a der Aufnahme 14, sodass schließlich die Konfiguration gemäß der Fig. 8c erreicht wird. Da die in der Fig. 7 eingezeichnete Entfernung E zwischen der Kippkante 19 des zweiten Endbereiches 17 und dem Übergang zum abgeflachten, freien Ende 18 des ersten Endbereiches 16 des Einsatzes geringfügig größer als der Öffnungsquerschnitt Q der Aufnahme 14 ist, wird ein Formschluss bewirkt, und der Einsatz wird innerhalb der Aufnahme 14 gehalten. Zum Öffnen des Verbindungselements werden diese Bewegungsvorgänge umgekehrt.

Mithilfe der Erfindung wird somit ein Verbindungselement für manschettenartige Isolierungen 2 für Behälter 1 bereitgestellt, die einfach zu schließen sind, auch über lange Zeit einen sicheren Verschluss sicherstellen, und dabei bei Bedarf auch wieder lösbar sind.

## Patentansprüche

1. Verbindungselement für aneinander liegende Stirnflächen einer, einen Behälter (1) manschettenartig umgebenden thermischen Isolierung (2), wobei zwei leistenartige Profilelemente (7, 8) mit jeweils einem Befestigungsabschnitt (9) für jeweils eine Stirnfläche der Isolierung (2) vorgesehen sind, wobei das erste Profilelement (7) eine an den Befestigungsabschnitt (9) anschließende Aufnahme (14) mit einer konkaven, im Querschnitt halbkreisförmig gewölbten Innenfläche (14a) aufweist, und das zweite Profilelement (8) einen an den Befestigungsabschnitt (9) anschließenden Einsatz mit zwei, im Querschnitt bogenförmigen Endbereichen (16, 17), deren konvexe Außenflächen in ihrer Krümmung jener der konkaven Innenfläche (14a) der Aufnahme (14) jeweils entsprechen, **dadurch gekennzeichnet, dass** das erste Profilelement (7) eine die Innenfläche (14a) verlängernde und den Öffnungsquerschnitt (Q) der Innenfläche (14a) geringfügig verengende Halteschulter (15) aufweist, wobei die Außenfläche eines ersten Endbereiches (16) des zweiten Profilelements (8) in ein abgeflachtes, freies Ende (18) übergeht, und die Außenfläche eines zweiten Endbereiches (17) des zweiten Profilelements (8) über eine Kippkante (19) in eine Nut (20) für die Halteschulter (15) übergeht.

2. Verbindungselement nach Anspruch 1, **dadurch gekennzeichnet, dass** der Befestigungsabschnitt (9) jeweils als Klemmabschnitt ausgeführt ist, der an die jeweilige Stirnfläche der Isolierung (2) über Klemmwirkung montierbar ist.

3. Verbindungselement nach Anspruch 2, **dadurch gekennzeichnet, dass** der Klemmabschnitt jeweils zwei Schenkel aufweist, die federnd ausgeführt sind.

4. Verbindungselement nach Anspruch 3, **dadurch gekennzeichnet, dass** einer der beiden Schenkel einen im Wesentlichen senkrecht abstehenden Betätigungsabschnitt (12) aufweist.

5. Verbindungselement nach Anspruch 3, **dadurch gekennzeichnet, dass** zumindest einer der beiden Schenkel einen hakenförmigen Fortsatz (13) aufweist.

## Claims

1. A connecting element for abutting end faces of a thermal insulation (2) enclosing a container (1) like a collar, wherein two bracket-type profile elements (7, 8), each having a fastening element (9), are respectively provided for each end face of the insulation (2), wherein the first profile element (7) has a receptacle (14) adjoining the fastening section (9), having a concave inner surface (14a) curved in a semicircle in cross section, and the second profile element (8) has an insert adjoining the fastening section (9) having two end regions (16, 17) curved in cross section, whose convex outer surfaces each correspond in their curvature to that of the concave inner surface (14a) of the receptacle (14), **characterized in that** the first profile element (7) has a holding shoulder (15) extending the inner surface (14a) and slightly constricting the opening cross section (Q) of the inner surface (14a), wherein the outer surface of a first end region (16) of the second profile element (8) merges into a flattened free end (18), and the outer surface of a second end region (17) of the second profile element (8) merges via a tilt edge (19) into a groove (20) for the holding shoulder (15).

2. The connecting element according to Claim 1, **characterized in that** the fastening section (9) is respectively embodied as a clamping section, which is installable on the respective end face of the insulation (2) via clamping action.

3. The connecting element according to Claim 2, **characterized in that** the clamping section respectively has two legs, which are embodied as resilient.

4. The connecting element according to Claim 3, **characterized in that** one of the two legs has a substantially perpendicularly protruding actuating section (12).

5. The connecting element according to Claim 3, **characterized in that** at least one of the two legs has a hooked extension (13).

## Revendications

1. Élément de liaison pour des faces d'extrémité appliquées l'une contre l'autre d'une isolation thermique (2) entourant un récipient (1) à la manière d'un manchon, deux éléments profilés en forme de baguette (7, 8) ayant chacun une partie de fixation (9) pour une face d'extrémité respective de l'isolation (2) étant prévus, le premier élément profilé (7) présentant un logement (14) contigu à la partie de fixation (9) et ayant une surface intérieure concave (14a), incurvée en demi-cercle en section transversale, et le deuxième élément profilé (8) présentant un insert contigu à la partie de fixation (9) et ayant deux zones d'extrémité (16, 17) en forme d'arc en section transversale, dont les surfaces extérieures convexes correspondent par leur courbure à celle de la surface intérieure concave (14a) du logement (14), **caractérisé en ce que** le premier élément profilé (7) présente un épaulement de retenue (15) qui prolonge la surface intérieure (14a) et restreint légèrement la section transversale d'ouverture (Q) de la surface intérieure (14a), la surface extérieure d'une première zone d'extrémité (16) du deuxième élément profilé (8) se transformant en une extrémité libre aplatie (18), et la surface extérieure d'une deuxième zone d'extrémité (17) du deuxième élément profilé (8) se transformant en une rainure (20) pour l'épaulement de retenue (15) par l'intermédiaire d'une arête basculante (19).

2. Élément de liaison selon la revendication 1, **caractérisé en ce que** la partie de fixation (9) est conçue dans chaque cas comme une partie de serrage pouvant être montée sur la face d'extrémité respective de l'isolation (2) par effet de serrage.

3. Élément de liaison selon la revendication 2, **caractérisé en ce que** la partie de serrage présente dans chaque cas deux branches faisant ressort.

4. Élément de liaison selon la revendication 3, **caractérisé en ce que** l'une des deux branches présente une partie d'actionnement (12) faisant saillie sensiblement verticalement.

5. Élément de liaison selon la revendication 3, **caractérisé en ce qu'**au moins une des deux branches présente un prolongement en forme de crochet (13).
